# EUROPEAN PATENT SPECIFICATION

(11) **EP 1 484 830 B1**
(45) Date of publication and mention of the grant of the patent: **12.12.2012**
(21) Application number: 02740776.6
(22) Date of filing: 14.06.2002
(51) Int. Cl.: H02K 5/04, E05F 15/00, B60J 1/17, F16M 7/00

(54) **DEVICE FOR MOUNTING A WINDOW REGULATOR MOTOR**
EINRICHTUNG ZUM ANBRINGEN EINES FENSTERREGULATORMOTORS
DISPOSITIF DE MONTAGE D'UN MOTEUR LEVE-VITRE

(30) Priority: 11.03.2002 ES 200200567
(43) Date of publication of application: 08.12.2004
(73) Proprietor: GRUPO ANTOLIN-INGENIERIA, S.A., 09007 Burgos (ES)
(72) Inventor: MANZANAS RODRIGUEZ, Ricardo, E-34230 Torquemada (Palencia) (ES); MATEOS PUCHE, Coral, E-09006 Burgos (ES); NEBREDA DE LA IGLESIA, Félix, E-09006 Burgos (ES); DOMINGUEZ RUBIO, Francisco, E-09007 Burgos (ES); GARCIA GARCIA, Rafael, E-09003 Burgos (ES); BARRANCO MANGAS, Alberto, E-09400 Aranda de Duero (ES)
(74) Representative: Capitán García, Maria Nuria
(86) International application number: PCT/ES2002/000299
(87) International publication number: WO 2003/077402

(56) References cited:
- EP-A- 0 856 454
- WO-A-98/05523
- ES-T- 2 162 294
- US-A- 5 102 090
- US-A- 5 111 715

## Description

This invention concerns a device for the assembly of a window regulator motor and the kinematic device connected to it through a panel in the bodywork of a motor vehicle. The window regulator motor is connected to a casing as a cover containing the motor and the gear reducer, and the kinematic device is connected to another casing containing the drum. Both casings, therefore, normally have two facing surface areas located on either side of the panel, which has holes in it allowing connecting means to pass through between both casings.

Generally speaking the facing surface areas of both casings form a triangle and the panel has three holes in it to allow connecting means to pass through to fasten both casings.

The patent GB-A-885.134 has a device for connecting panels of equal thickness with two parts that bring together the two faces of each panel to secure the panels.

The side of one of the parts receives the two sides the panels and Is T-shaped. The two wings of the T are supported against the faces of one side of both panels. The stem of this part passes through the space between the panels and projects towards the other faces of the panels and extends outwards beyond them. The stem has a blind threaded hole that is open at its free end.

This part of the projecting stem is held by U-shaped female parts, which have a threaded hole in the base. A bolt passes through the hole to fix both parts to the panels.

Obviously both the panels used in this solution have the same thickness and are also coplanar. The considerable pressure exerted on them by the two parts -male and female- is sufficient thanks to the bolt that acts as the means of union.

As someone with expert knowledge in the subject would understand, the T-shaped male part can be manufactured in separate sections that are spaced apart instead of in longitudinal sections as detailed in GB-A-885134.

The description of this patent also implies that a combination of two parts -male and female- is used, with the parts being connected to two coplanar panels. The male part has a projecting stem that passes through the space between the panels and projects out of the other side where it connects to the female part, with both parts being connected by a bolt forcing them down on the continent plane of the panels.

Patent DE-A-2249963 also concerns a device that fastens two parts of equal thickness to a third part. The parts have semi-cylindrical holes in their surfaces, and when both parts come into contact with each other those holes form a cylindrical hole. The third part has a hollow, internally threaded cylindrical projection, which is housed in the aforementioned cylindrical recess formed by the two parts of equal thickness.

The hollow projection of the third part is housed, in either a tight or a loose fitting manner, in the hole formed by the two other parts to fasten these two parts together. The third part has a base that forms a closed support part on the surface of the two pieces to be fastened together.

A fourth part is located on the opposite face of the two parts and has a closed support part that rests against the exterior surfaces of the two parts to be fastened together. In the centre of this fourth part there is threaded projection that points towards the hole.

In this hole the threaded projection is received in the recess of the third part to fasten together the first two parts and the third part securely.

From a technical point of view, someone with expert knowledge on the subject could apply this method of execution by viewing the two parts to be fastened together as one part only, with the third and fourth parts forming a closed support part resting against the opposite faces of the single third part and exerting pressure on it.

The technique used in this patent, DE-A-2249963, could be combined with the one employed in GB-A-885.134, with the latter being applied to holes instead of grooves wherein the U-shaped part In GB-A-885.134 would completely encircle the stem housed in to form. a hollow cylindrical shape.

EP-A-0892724 also details a specific means of connecting the casings of a window regulator motor and the related kinematic device through holes formed in a panel in the bodywork. A part projecting out from each of the three vertices of the drum casing passes through the holes in the panel in the vehicle bodywork. Each of these projections has a circular axial hole.

The motor casing also has some recesses to receive the aforementioned projections and the bottom of these recesses has a circular hole.

The foregoing projections and recesses are then connected and secured with bolts housed In the part of the motor casing where the unit is fastened.

Here, it should be pointed out that the techniques described in GB-A-885134 and DE-A-2249963 are applied, in the main, in the solution referred to in EP-A-0892724, particularly with regard to a projection passing through a hole with a plane and this part then connecting with a female part holding it. These parts are then fastened together by joining means exerting pressure on the planar area between them.

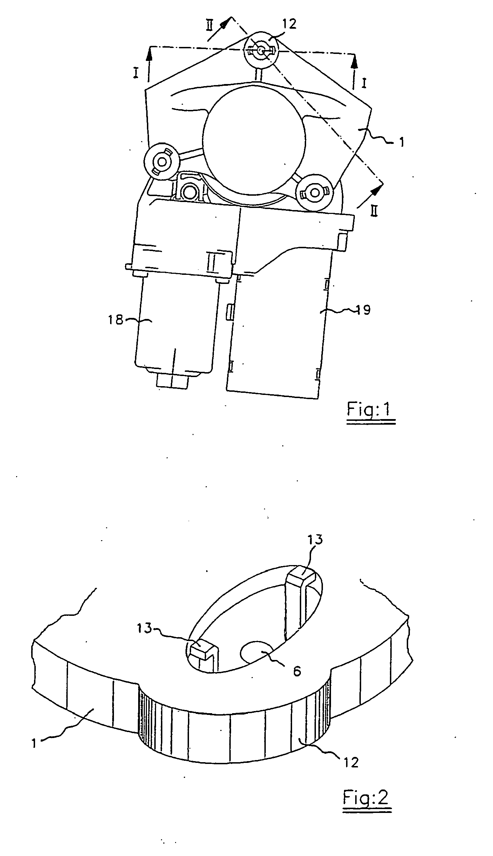

In the last of these patents, and as detailed in figure 2 and claimed in claim 2, the front face of the projection originating from one of the two casings is adjusted at the base and at the sides of the recess in the other casing and, as a result, when the connecting means fastening them together is introduced, the connection may prevent the two casings from exerting the required pressure on the vehicle bodywork, as it would reduce said pressure.

The two plastic casings detailed in the aforementioned patent both have an additional fastening, acting as a housing. The housing ensures that one of the casings -the cable drum casing, for example- is held in position after the motor casing has been removed.

This additional housing is already known of and is a recognised part of the technique. In US-A-5,729,930, for example, claims 7, 8 and 9 state that the housing is used because it forms an integral part of the projection of one of the two casings.

In EP-A-0892724 the resistance against the torques exerted on the window regulator motor when it is locked at the start and end is created by a single projection that provides resistance, regardless of the power of the motor. This part has a constant shape and is connected to a projection that performs a dual function: it is the main fastening point between the two casings and it also provides an additional fastening point in the form of an auxiliary locking.

Another drawback in this technique is that the frontal contact between the two plastic casings prevents them from closing properly with the vehicle bodywork, with unwanted gaps being created.
It Is known US-A-5111795 which discloses a window regulator carried by a panel and a motor drive unit with a drive gear projecting from an opening in a housing and adapted to drive the window regulator. A cover is provided for attachement on the housing to close the opening. The cover has a plurality of spaced apart first tangs which engage the housing to effect attachment of the cover on the housing. The cover also has a plurality of spaced apart second tangs which project away from the housing. A plurality of openings are provided in the panel to register with the plurality of second tangs and receive the second tangs in snap fitting engagement with the openings so that the motor drive unit is attached to the door panel. The second tangs are stamped integrally with the cover and include a retorsely bent leg adapted to yleldably engage the opening in the panel and carrying a lock tab which engages with the the face of the panel to assure the attachment of the motor unit on the door panel against removal therefrom.
And it Is also known EP-A2-0856454 A device for securing a functional part on a body-in-white of a motor vehicle. The mounting location of the body-in-white is designed as a receptacle that has an opening in a bottom to bring the screw parts together and the screw part on the body-in-white side is held in a cage that is adapted to the dimensions of the receptacle for insertion into the tub-shaped receptacle. The cage is capable of being secured in the receptacle via a latching connection, with at least two latching points being provided at walls of the receptacle at a distance from one another, and with at least two matching latching elements being provided on corresponding support sections of the cage.

It is an object of this invention to provide a device for the assembly and connection of two casings, preferably made of plastic, through holes made in the metal bodywork where gaps are eliminated, and the parts are fastened more securely and tightly to the vehicle bodywork.

Another object of the invention is to provide a device of assembly and connection where the casings are fastened together more securely, thus providing greater versatility during assembly.

Another object of the invention is to provide a device of assembly and connection that can be applied to window regulator motors -drive drums- and which have greater capacity to absorb the torques exerted on the motor when it is in locking.

In order to implement these objectives the invention proposes a device comprising the features of claim 1, wherein two plastic casings are positioned on either side of the vehicle bodywork where holes have been formed in the panel, and incorporating one of the casings, the motor-reducer, the other casing, the connected kinematic device, the drum, etc.

In the surface area or areas where the holes have been formed in the panel, the drum casing has a blind threaded hole, which is axially aligned with the hole. Diametrically positioned clips project outwards on either side of this blind hole at an equal distance from it.

These clips open outwards and the distance between the outer sections of the clips is the same as the diameter of the hole cut into the panel.

The other plastic casing housing the motor has at least one threaded through hole, which coincides axially with the hole in the panel.

When assembling both casings on either side of panel where the holes are located, the drum casing is brought towards the panel and the clips on the casing are forced into position against the edge of the hole. They are then brought together and once they pass through the hole they expand to secure the casing in a prehousing, with the surrounding surface area in contact with the outer surface of the bodywork panel.

The motor casing incorporates bolts in its through holes, which are premounted through the corresponding membranes positioned beforehand in the holes.

These holes are formed in the bottom of grooves cut in the upper face of raised sections on the casing. The raised sections are supported on the face of the vehicle bodywork, opposite the face of the drum casing.

The grooves in these raised sections are rectangular and the cross-section is the same length as the distance between each pair of clips on the drum casing.

The threaded holes in the motor casing run down to the bottom of the grooves, and are perfectly centred in the bottom, coinciding axially with the blind hole in the drum casing.

In order to assemble both casings on the bodywork, the casings must be brought together where the holes are made in the bodywork. The clips are then secured to the drum casing after they have been passed through the hole in the motor casing groove -which acts as a guide and helps position them centrally- so that once the clips come out over the outside of the bodywork panel the ends of the clips can be fastened into place on the opposite face of the panel, thus supporting the surface of the drum casing on the panel.

At the same time the motor casing is supported on the bodywork on the side on which it is to be positioned. When the threaded holes in both casings are in line with each other the premounted bolt in the motor casing is screwed fully into the two holes forcing both casings down onto the bodywork until they are secured firmly, tightly and safely in position.

The invention also proposes a device whereby the two plastic casings are connected through a hole in the metal bodywork and where one of the casings has at least one projection, which passes through the hole and is housed in at least one recess in the other casing, thus separating two centring fonctions and the clipping ones on both casings.

One of the casings thus has projection groupings, normally consisting of three projections, two of which are clips that project outwards from the surface facing the bodywork, and another projection, which rises above the top of the two clips to form a triangle between the imaginary line made by the two clips and the projection itself.

The other casing also has supporting projection groupings consisting of raised sections with a recess in the frontal surface to house the clips on the other casing as well as lateral seating to receive the projection on the other casing.

The two casings face each other through the hole made in the panel so that the panel receives support on its frontal surface from the bases of the casings out of which project the clips, projection and support part.

The clips of one of the casings pass through the hole and are housed in the support recess in the other casing so that when pressure is exerted on them they enter the hole in the panel and are then spread out against the wall of the bodywork panel on the opposite side.

At the same time the projections of one of the casings pass through the holes in the panel and are received in the lateral recesses in the support parts of the other casing in such a way that they do not come into contact with the bottom of these recesses.

In the specific case of a window regulator motor for a motor vehicle, the casing incorporating the kinematic device, drum etc., is normally triangular and the groupings of clips and projections are located on the vertices of this triangular formation. Preferably, each grouping of clips and projections will project out from each of the vertices in different directions to the other two groupings.

The support parts on the other casing, corresponding with the first casing, are also located on the vertices and its housings and lateral recesses are also in line with the clips and recesses of the casing housing the kinematic device.

The seating recesses formed in the support parts of one of the casings to receive the projections of the other casing are generally open on one side of the support part and the inner walls of the recess come into contact with the exterior of the projections.

Alternatively, the recesses can be closed, thus meaning that the projections will be fully received by them.

The specific features of the invention can be seen in greater detail in the plans attached, full details of which are given below:
Figure 1 is an example of an assembly with motor and drum casings.
Figure 2 shows a detail of one of the seating areas for the drum casing on the panel according to the preferred solution of the invention.
Figure 3 shows another detail of one of the seating areas for the drum casing on the panel according to the preferred solution of the invention.
Figure 4 shows a detail of the seating area for the motor casing on the panel according to a variation of the invention.
Figure 5 shows a detail of the seating area for the motor casing on the panel, corresponding with figure 4.
Figure 6 is a cross-section of both casings according to the cross-section along the I-I line in figure 1, common to all the invention's solutions.
Figure 7 is a cross-section of the assembly of both casings according to the cross-section along the II-II line in figure 1, applicable to all variations of the invention.

In accordance with figure 1 we can see a conventional motor-reducer unit (18, 19) with a casing connected to another casing (1) housing the kinematic device. Both casings are, for example, triangular where the vertices (12) are formed by the areas where the two casings meet.

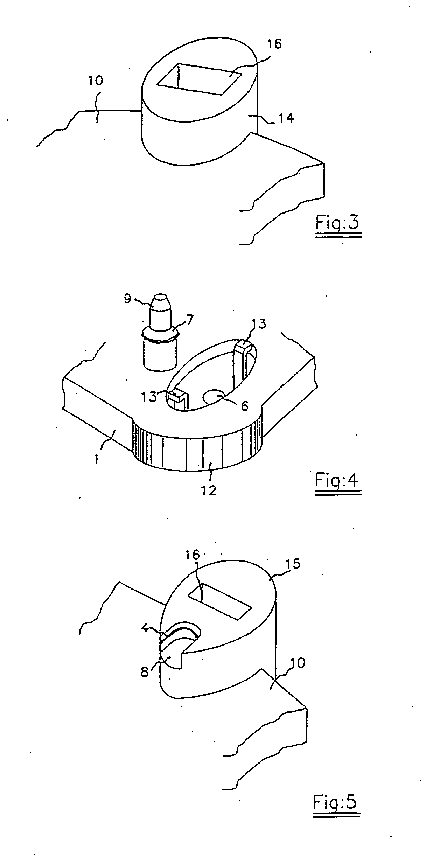

In accordance with the preferred solution of the invention detailed in figures 2 and 3, the vertices (12) of the drum casing (1) have two aligned clips (13) attached to them, both of which open outwards. A blind threaded hole (6) formed to receive a bolt is positioned centrally between the two clips.

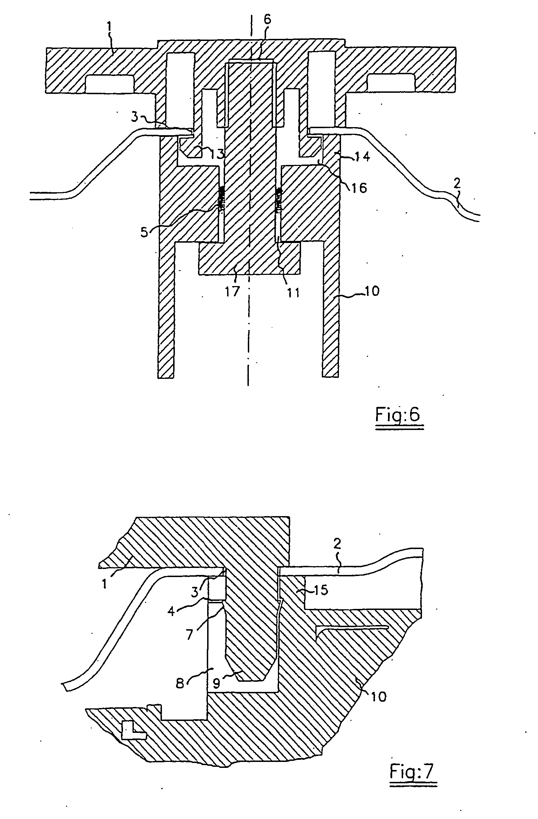

The vertices of the motor casing (10) have raised sections (14), which are finished with a frontal surface into which rectangular grooves (16) have been cut. Properly centred threaded through holes (11) have been formed in the bottom of the grooves, as detailed in figure 6.

Both casings (1, 10) face each other on either side of the panel where the corresponding holes (3) have been formed (see figures 6 and 7).

The surfaces of both casings are supported on the two faces of the panel and the clips (13) of the casing (1) are housed in the hole (3) in the panel (2). The clips are forced against the inner edge of the hole and are then extended outwards to embrace the panel.

This is a pre-housing position wherein the casing (1) remains attached to the panel (2) -see figures 6 and 7-, thus preventing it from falling off when it is being assembled. This function and its execution are known techniques.

Once the pre-assembly has been completed, the casing (10) is then positioned on the ends of the clips (13) with the grooves (16) of the casing facing towards the clips, enabling the clips to enter the grooves without coming into contact with the bottom of the grooves, as can be seen in figure 6.

The connection between the clips (13) and the grooves (16) is dual purpose. It completes the pre-assembly of the drum casing (1) itself on the panel (2) and also enables the pre-assembly of the motor casing (10) wherein the clips (13) are housed and guided in the grooves (16). This is achieved without the ends of the clips being completely encircled by the grooves or having any pressure exerted on them.

The assembly (see figure 6) is completed when the premounted bolt (17) enters, pre-housed with the membrane (5) in the casing (10), which is housed in the blind hole in the casing (1).

It is clear that the solution makes use of the dual purpose pre-assembly clips (13) and does not use the projection described in EP-A-0892724, wherein, as has already been stated, the two casings on the panel are not held as securely in position.

Furthermore, and with regard to figures 4, 5 and 7, we would like to highlight one difference from other inventions, namely the locating of a projection (9) at a distance from each pair of clips (13) on each or some of the vertices of the drum casing (1).

As with these projections (9) the sections (15) of the motor casing (10) have recesses (8) that open upwards and outwards to one side. These recesses receive the projections detailed in figure 7.

The projections (9) have edges (7) and the recesses (8) grooves (4), to form a mechanism for the preassembly of the motor casing (10) before the final assembly of them.

The projections (9) do not come into contact with the bottom of the recesses (8), as can be seen in figure 7, thus allowing the two casings to be fastened securely to the bodywork panel.

In each of the areas where the clips (13) are positioned, either on their own or in a grouping with the projections (9), the positions of them vary from one area to another in order to eliminate any potential faults during assembly.

The recesses (8) can be closed off on one side. This enables the grooves (4) to extend in a circular fashion inside them, thus making pre-assembly more effective, if this is possible, with the projection (9) being fully encased in this recess.

The other casing (10) (see figure 4) has a support part (15) with the groove (16) to receive the clips (13) as well as a lateral recess (8) to receive the projection (9).

The recess opens outwards, as can be seen, and halfway up the recess there is a horizontal groove (4), which will house the edge (7) of the projection (9) (see figures 3 and 6).

In figure 7 we can see the position of the projection (9) of the casing (1) with the lateral recess (8) of the support part (15) of the casing (10) after it has passed through the hole (3) in the panel (2). The edge (7) is housed in the horizontal groove (4) of the recess and the lower end does not make contact with the bottom of the groove thus ensuring that the parts are not loose when they are assembled.

At the same time, as shown in figure 6, we can see the position of the clips (13) of the casing (1) that pass through the recess (3). When they are pushed through the hole in the panel (2) they are received inside the groove (16) of the support part (15) and remain connected to the other face of the aforementioned panel.

The support part (15) has an axial hole (11) that starts at the bottom of the groove (16) through which a bolt (17) is passed and this fastens the support part (14) to the casing (1) when it is also housed in the hole (6) of the casing containing the kinematic device.

## Claims

1. A window regulator motor assembly device and the connected kinematic device which adjusts a casing (1) acting as a drum cover, which houses the kinematic device pulling on the window and a motor (18) with its own casing (10), through holes (3) made in a panel (2) in part of the vehicle bodywork, three holes are normally made in said panel (2) with both casings (1, 10) having holes to allow bolts (17) to pass through and connect them, the drum casing (1) is supported on one face of the panel (2) and the motor casing (10) is supported on the other face of the panel through which a bolt (17) passes through the hole in the panel (2) and is received in a blind hole (6) of the other casing, **characterized in that**
- the bolt (17) is premounted in the motor casing (10),
- the drum casing (1), which is supported on one face of the panel (2), has a pair of clips (13) on each of its three fastening areas, these clips are diametrically opposite to a central blind hole in each area,
- the clips (13) on the drum casing (1) are forced through the holes (3) in the panel (2) and are housed in the grooves (16) of the support parts (14, 15) made in the motor casing (10) and make contact with the opposite face of the panel when they expand,
- enabling the clips (13) to enter the grooves (16) without coming into contact with the bottom of them,
- the clips (13) are housed and guided in the grooves (16), without the ends of the clips (13) being completely encircled by the grooves (16) or having any pressure exerted on them.

2. A window regulator motor assembly device and the connected kinematic device according to claim 1 wherein the motor casing (10) has at least one projection (9) separated from the pair of clips (13), which passes through the hole (3) in the bodywork and is housed in a lateral recess (8), which opens upwards and to one side from a raised section (15) on the motor casing (10), with the projection (9) also incorporating an edge (7) that is fitted with a clip into an internal groove (4) in the aforementioned recess.

3. A window regulator motor assembly device and the connected kinematic device according to claim 2 wherein the recess (8) is closed laterally.

4. A window regulator assembly device and the connected kinematic device according to claims 1, 2 and 3 wherein the relative positions between the clips (13) and projections (9) of the casing (1) and the grooves (16) and the seating (8) of the casing (10) meet up when they are fitted together, each grouping of the clips (13) and projections(9) projects outwards in a different direction to the other two groupings.

## Patentansprüche

1. Motorbaugruppe zur Regulierung von Fenstern samt der zugehörigen Bewegungsvorrichtung, die ein Gehäuse (1) reguliert, das als Abdeckung einer Trommel fungiert, welche die Bewegungsvorrichtung, die am Fenster zieht, und einen Motor (18) samt seinem eigenen Gehäuse (10) beherbergt, wobei in eine Platte an einem Teil der Fahrzeugkarosserie (2) Löcher (3) eingelassen sind - in der Regel drei Löcher in der genannten Platte (2), wobei beide Gehäuse (1, 10) Löcher besitzen, durch die man Verbindungsschrauben (17) führt -, wobei an einer Seite der Platte (2) das Trommelgehäuse (1) und an der anderen Seite dieser Platte das Motorgehäuse (10) befestigt ist und eine Schraube (17) durch das Loch in der Platte (2) verläuft und von einem blinden Loch (6) im anderen Gehäuse aufgenommen wird, **dadurch gekennzeichnet, dass**
- die Schraube (17) im Motorgehäuse (10) vormontiert ist,
- das an einer Seite der Platte (2) befestigte Trommelgehäuse (1) in jedem der drei Befestigungsbereiche ein Klemmenpaar (13) besitzt, welches jeweils (in jedem Bereich) einem zentral gelegenen blinden Loch diametral gegenüberliegt,
- man diese am Trommelgehäuse (1) angebrachten Klemmen (13) durch die Löcher (3) der Platte (2) zwingt und derart in den Nuten (16) der Befestigungsteile (14, 15) des Motorgehäuses (10) unterbringt, dass sie beim Expandieren den Kontakt mit der gegenüberliegenden Plattenseite herstellen,
- die Klemmen (13) sich in die Nuten (16) hinein bewegen, ohne mit deren Boden in Kontakt zu treten,
- die Klemmen (13) derart in den Nuten (16) gelagert und geführt sind, dass die Klemmenenden nicht gänzlich in die Nuten (16) eingelassen sind und die Klemmen keinem Druck ausgesetzt sind.

2. Motorbaugruppe zur Regulierung von Fenstern samt der zugehörigen Bewegungsvorrichtung nach Anspruch 1, wobei das Motorgehäuse (10) mindestens einen vom Klemmenpaar (13) hervorstehenden Vorsprung (9) umfasst, der durch das in die Karosserie eingelassene Loch (3) verläuft und in einer seitlichen Vertiefung (8) untergebracht ist, die sich, ausgehend von einem erhobenen Abschnitt (15) am Motorgehäuse (10), nach oben und nach einer Seite hin öffnet, **dadurch gekennzeichnet, dass** dieser Vorsprung (9) auch eine Kante (7) besitzt, die mithilfe einer Klemme in eine interne Kerbe (4) in der oben erwähnten Vertiefung eingepasst ist.

3. Motorbaugruppe zur Regulierung von Fenstern samt der zugehörigen Bewegungsvorrichtung nach Anspruch 2, wobei sich die Vertiefung (8) zur Seite hin schließt.

4. Baugruppe zur Regulierung von Fenstern samt der zugehörigen Bewegungsvorrichtung nach den Ansprüchen 1, 2 und 3, dadurch ausgezeichnet, dass die Klemmen (13) und Vorsprünge (9) des Gehäuses (1), die Nuten (16) und die Lagerungen (8) des Gehäuses (10) derart zueinander positioniert sind, dass sie sich beim Zusammensetzen treffen, wobei jede einzelne Anordnung aus Klemmen (13) und Vorsprüngen (9) in eine von den anderen beiden Gruppen unterschiedliche Richtung nach außen zeigt (hervorsteht).

## Revendications

1. Dispositif d'assemblage de moteur de lève-vitre et le dispositif cinématique connecté qui ajuste un boîtier (1) qui agit comme un couvercle de tambour, qui loge le dispositif cinématique qui tire sur la vitre et un moteur (18) avec son propre boîtier (10), à travers des trous (3) aménagés dans un panneau (2) dans une partie de la carrosserie de véhicule, trois trous sont normalement réalisés dans ledit panneau (2), les deux boîtiers (1, 10) ayant des trous pour permettre que les boulons (17) les traversent et les connectent, le boîtier de tambour (1) est appuyé sur une face du panneau (2) et le boîtier de moteur (10) est appuyé sur l'autre face du panneau à travers lequel un boulon (17) traverse le trou dans le panneau (2) et est reçu dans un trou borgne (6) de l'autre boîtier,
**caractérisé en ce que**
- le boulon (17) est pré-monté dans le boîtier de moteur (10),
- le boîtier de moteur (1), qui est appuyé sur une face du panneau (2), possède une paire d'agrafes (13) sur chacune de ses trois zones de fixation, ces agrafes sont diamétralement opposées à un trou borgne central dans chaque zone,
- les agrafes (13) sur le boîtier de tambour (1) sont forcées à travers les trous (3) dans le panneau (2) et sont logées dans les rainures (16) des parties d'appui (14, 15) réalisées dans le boîtier de moteur (10) et entrent en contact avec la face opposée du panneau lorsqu'elles s'étendent,
- en permettant que les agrafes (13) entrent dans les rainures (16) sans entrer en contact avec le fond de celles-ci,
- les agrafes (13) sont logées et guidées dans les rainures (16), sans que les extrémités des agrafes (13) ne soient complètement encerclées par les rainures (16) ou n'aient exercé aucune pression sur celles-ci.

2. Dispositif d'assemblage de moteur de lève-vitre et le dispositif cinématique connecté selon la revendication 1 dans lequel le boîtier de moteur (10) a au moins une projection (9) séparée de la paire d'agrafes (13), qui traversent le trou (3) dans la carrosserie et est logée dans un évidemment latéral (8), qui s'ouvre vers le haut et vers un côté d'une section élevée (15) sur le boîtier de moteur (10), la projection (9) incorporant également un bord (7) qui est ajusté avec une agrafe dans une rainure interne (4) dans l'évidemment précité.

3. Dispositif d'assemblage de moteur de lève-vitre et le dispositif cinématique connecté selon la revendication 2, dans lequel l'évidement (8) est fermé latéralement.

4. Dispositif d'assemblage de moteur de lève-vitre et le dispositif cinématique connecté selon les revendications 1, 2 et 3, dans lequel les positions relatives entre les agrafes (13) et les projections (9) du boîtier (1) et les rainures (16) et le siège (8) du boîtier (10) se rencontrent lorsqu'elles s'emboîtent, chaque groupe d'agrafes (13) et de projections (9) se projette vers l'extérieur dans une direction différente des deux autres groupes.
